# EUROPEAN PATENT SPECIFICATION

(11) **EP 2 191 724 B1**
(45) Date of publication and mention of the grant of the patent: **04.06.2014**
(21) Application number: 09177254.1
(22) Date of filing: 26.11.2009
(51) Int. Cl.: A22C 7/00

(54) **Mould for pressing food products**
Form zum Pressen von Lebensmitteln
Moule pour le pressage de produits alimentaires

(30) Priority: 27.11.2008 IT MO20080311
(43) Date of publication of application: 02.06.2010
(73) Proprietor: VE.MA.C. Societa' A Responsabilita' Limitata, 41051 Castelnuovo Rangone (MO) (IT)
(72) Inventor: Costantini, Maurizio, 41057, Spilamberto (MO) (IT); Malagoli, Uliano, 41041, Formigine (MO) (IT); Vezzali, Franco, 41057, Spilamberto (MO) (IT)
(74) Representative: Crugnola, Pietro

(56) References cited:
- FR-A1- 2 766 062
- FR-A1- 2 853 209
- FR-A1- 2 882 630
- FR-A5- 2 076 571
- NL-A- 8 403 736

## Description

The present invention relates to a mould for pressing food products, i.e. a mould in which food products, for example hams, or cuts of meat, are pressed and shaped, so as to assume a substantially parallelpiped shape, to be subjected to subsequent treatments, such as, for example, a freezing treatment such as to be able to be sliced by highspeed industrial slicing machines, as, for example, in the case of matured hams, or to processes preceding the maturing step, as, for example, in the case of "speck".

From the prior art, moulds are known for pressing food products, in particular hams, consisting of a plurality of mould elements that are superimposable between themselves, each of which is provided with a seat in the shape of a channel that is opened upwards, inside which the food product to be pressed and shaped insertable. Each mould element is provided with compression means, consisting of a slidable piston, to compress the product contained in the seat of the mould element in a longitudinal direction.

When the mould elements are superimposed, each mould element acts as cover for the seat of the element immediately below. Hooking means is also provided to maintain the mould elements hooked together during the step of pressing the food products.

Moulds known from the prior art have various drawbacks, such as, for example, the instability of the hooking elements, which tend to open easily during the step of pressing the product, through the effect of the thrusts exerted on the mould elements by the products that are pressed, in particular when hams, or cuts of meat are pressed that require high pressing pressures. Further, the product subjected to pressing tends to infiltrate the contact zones between contiguous mould elements, exiting partially from the channel of the mould element in which it is contained, which determines drawbacks in the pressed product, which are not acceptable, for example in the case of hams, in which the possibility of obtaining cuts with a regular type without defects is required.

Lastly, the assembly and dismantling of known prior-art moulds are laborious and require a significant outlay of time.

NL 8403736 discloses a mold suitable to treat meat product comprising a cylindrical shape 5 with a tight bottom 6, an open side, opposite said bottom, and a cover member 12 whose outer circumference tight side abuts against the inside of the mold (5). FR 2766062 discloses food products, such as hams, that are moulded during cooking in stackable units (1 and 1'), each carrying a number of parallel troughs (3). Each trough is open at the top, and is closed by a cover (4 and 4') attached to the base of the trough above, when stacked. The products inside the trough are compressed longitudinally by pressure from one end (5). Each trough (3) has its own compression unit, including a piston (5) moved by a spring (6). The shaft of the piston (not shown) moves inside a tube, which limits the range of its movement in both directions. A notch on the shaft and tab at the end of the tube allow the piston to be locked in position at its outermost point of travel, this allows the trough to be filled without being under pressure. An alternative is described where the compression springs for a number of troughs are attached to a single plate which can be moved back and forth by some means.

FR 2882630 discloses a unit for molding food products, in particular for cooking ham is provided. The unit includes a set of parallel horizontal troughs. The troughs have a downwardly-oriented base and an upwardly-oriented opening and are fixed to one or more supports that enable units to be stacked on top of one another. A set of cover elements extend beneath the set of troughs such that, when units are stacked, a cover element is engaged in the trough opening of the subjacent unit. The unit also includes a built-in spring lock which, by application of a downward pressure, solidly connect the unit to a similar unit in an automatic manner in order to ensure that the respective support is fully supported. Subsequently, the lock can be retracted to separate two units from one another and to unstack same. Units can be joined by such automated locking in order to form a stable stack. The unit is suitable for use in the agri-food industry.

The object of the present invention is to provide a mould for pressing food products, in particular hams, or cuts of meat, that is easy to assemble and does not have phenomena of instability during pressing and does not cause defects in the pressed products.

The object of the invention is achieved by a mould for food products with the features of claim 1.

Owing to the invention, a mould is made available that enables the elements thereof to be assembled rapidly and easily, which enables pressed products without defects to be obtained and which maintains great stability during pressing of the products.

Some embodiments of the invention are disclosed below by way of non-limiting example with reference to the attached drawings, in which:
Figure 1 is an elevation view of a mould according to the invention;
Figure 2 is an elevation view of a mould element of the mould in Figure 1;
Figure 3 is a view from the right of the mould element in
Figure 2;

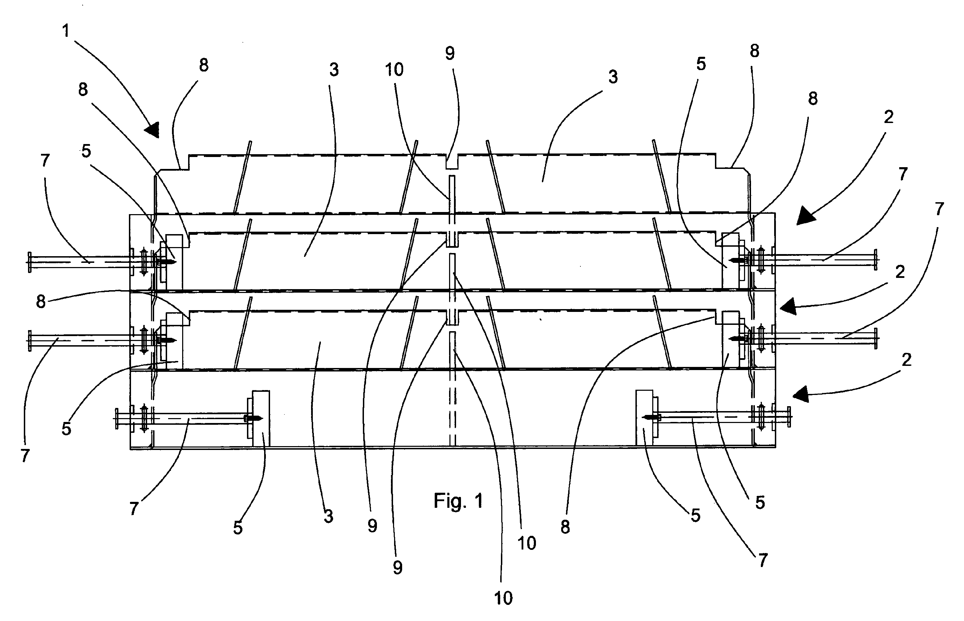

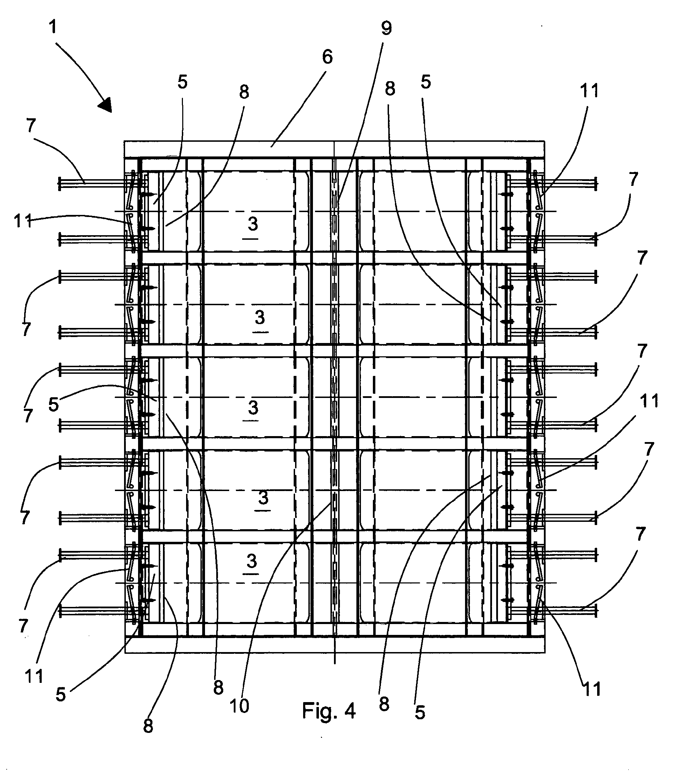

Figure 4 is a top view of the mould in Figure 1;

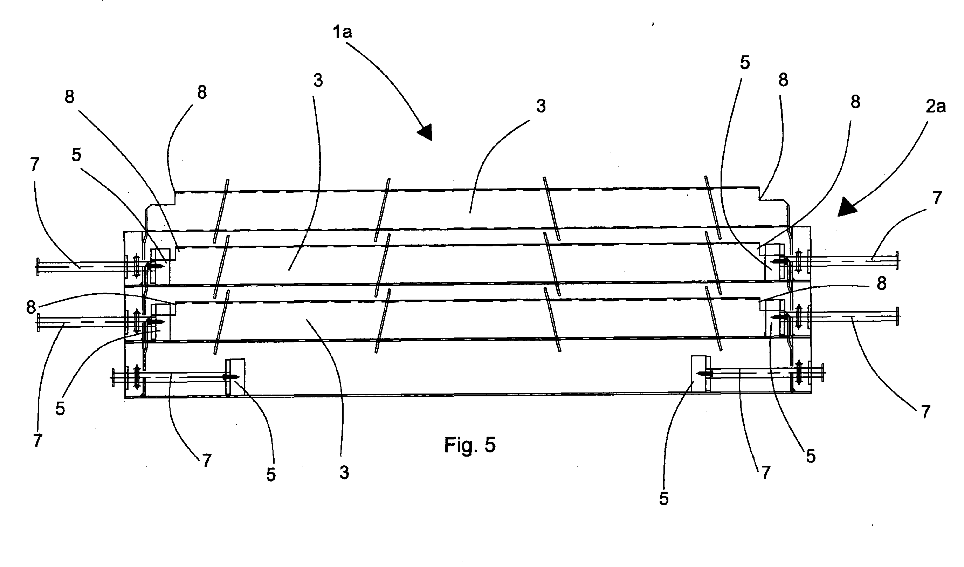

Figure 5 is an elevation view of a version of the mould in Figure 1;

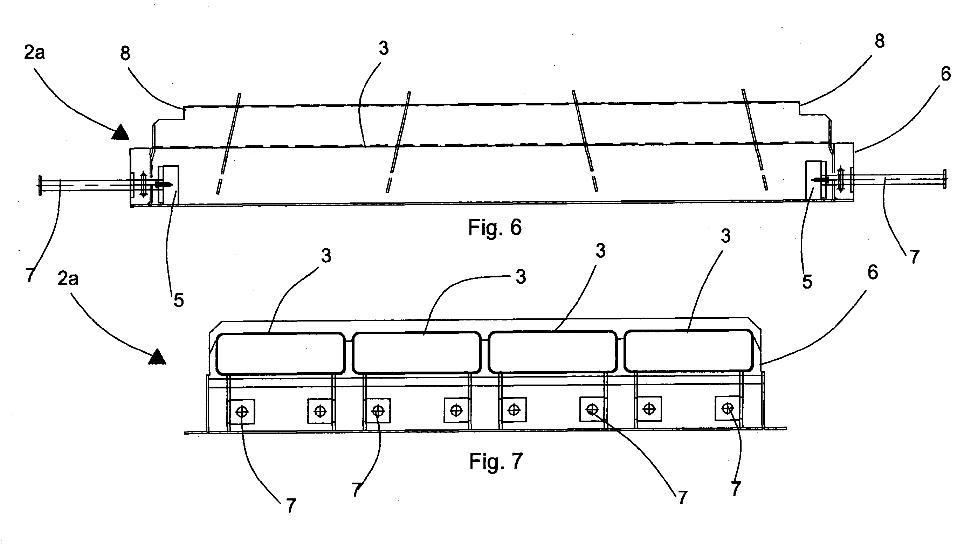

Figure 6 is an elevation view of a mould element of the mould version in Figure 5;
Figure 7 is a view from the right of the mould element in Figure 6;

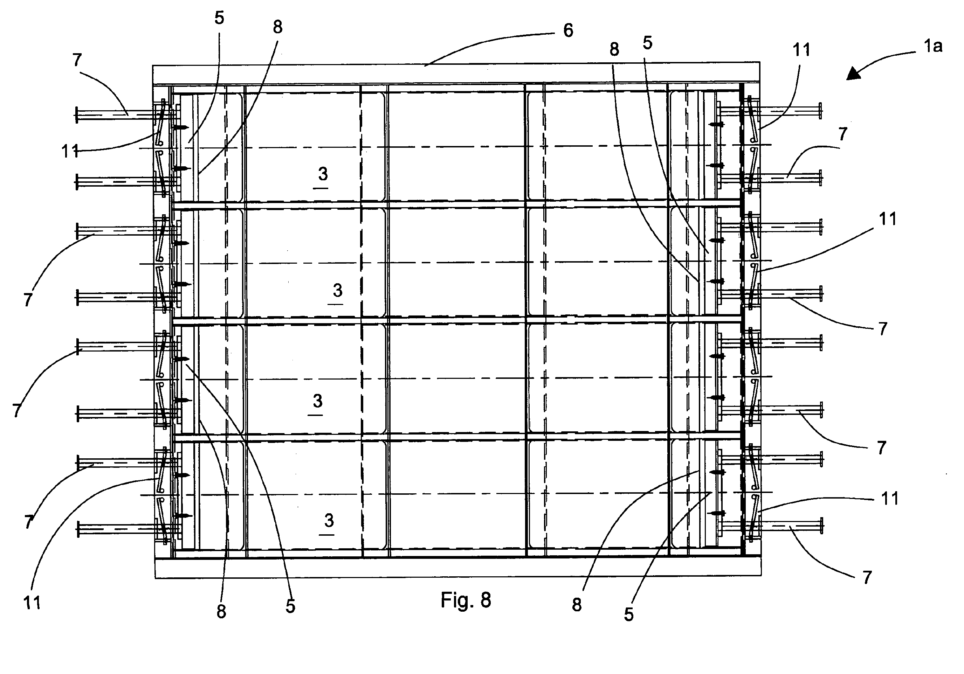

Figure 8 is a top view of the mould version in Figure 5;
Figure 9 is an enlarged detail of a further version of a mould element according to the invention.

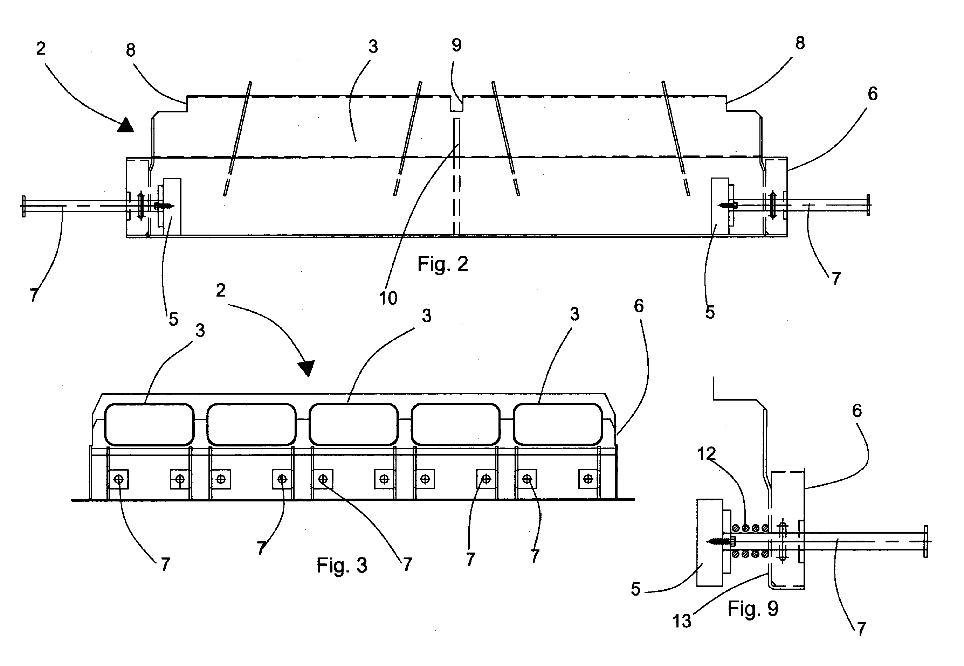

With reference to Figures 1 to 4, a mould 1 according to the invention comprises a plurality of mould elements 2, that are superimposable between themselves, each of which comprises a frame 6 to which a plurality of tubular elements 3 is stiffly fixed, open at both ends, suitable for receiving the products to be pressed, for example hams or cuts of meat. The tubular elements 3 have a substantially rectangular section with rounded tops.

At the opposite ends of the tubular elements 3 respective openings 8 are provided that are made in the upper part of each tubular element 3. With the opposite ends of the lower part of the frame 6, below the tubular elements 3, pressing elements 5 are slidingly coupled, each of which is provided with a pair of rods 7, that are slidingly coupled with the frame 6 and act as a guide for the pressing elements 5. The number of pressing elements 5 is the same as the number of tubular elements 3 of each mould element 2.

When two mould elements 2 are superimposed, the pressing elements 5 of the upper mould element can be inserted into the openings 8 of the tubular elements 3 of the underlying mould element 2, so as to be able to slide inside said tubular elements 3.

The rods 7 can be coupled with a thrust device, which is not shown, to push the pressing elements 5 inside respective tubular elements 3, in order to compress products contained therein, such as, for example, hams, or cuts of meat.

In the frame 6 one-way arresting elements 11 are provided that act on the rods 7 of the pressing elements 5, so as not to hamper the sliding thereof to the interior of the tubular elements 3, but to prevent the sliding thereof to the exterior of the tubular elements 3.

This ensures that the pressure applied to the products contained in the tubular elements 3 by the pressing elements 5 is maintained even when the thrust applied to the rods 7 by the thrust device ceases.

In the upper part of each tubular element, in a substantially central position, a transverse opening is provided 9. In the lower part of the frame 6, below each tubular element 3, in a central position corresponding to the position of the transverse opening 9, a plurality of transverse dividing elements 10 are fixed stiffly that can be the same number as the number of the tubular elements 3. The transverse dividing elements 10 are arranged so that, when two mould elements 2 are superimposed, the dividing elements 10 of the upper mould element 2 are inserted into the transverse openings 9 of the tubular elements 3 of the underlying mould element 2, so as to divide into two parts said tubular elements 3. In this manner, two product units, for example two hams, or two cuts of meat, can be pressed separately in each tubular element 3.

The dividing elements 10, being fixed rigidly to the frame 6, rest in a fixed position inside respective tubular elements 3 and cannot be subject to tilting, which could damage or deform the products contained in the tubular elements 3.

The mould 1 according to the invention is particularly easy to assemble, it being sufficient to superimpose the mould elements 2 between themselves, having care to insert the pressing elements 5 into the openings 8 of the tubular elements 3. No mechanical fixing is necessary between the various mould elements, because the products are pressed inside the tubular elements 3 and the forces that develop during the pressing step are not transmitted between one mould element 2 and those adjacent to the mould element, as occurs, on the other hand, in known prior-art moulds.

In Figures 5 to 8 there is illustrated a version 1a of a multiple mould according to the invention, which differs from the embodiment illustrated in Figures 1 to 4 through the fact that the mould elements 2a are not provided with the dividing elements 10 and that, consequently, the tubular elements 3 are devoid of the central transverse opening 9.

In this mould version 1a it is possible to press together, in each tubular element 3, two or more product units, for example two hams, or two cuts of meat, such as to obtain a single pressed product unit.

In Figures 4 to 8 the same reference numbers as for Figures 1 to 4 were used to indicate corresponding mould parts.

In Figure 9 there is illustrated an enlarged detail of a further version of a mould element according to the invention, in which on each rod 7 of each pressing element 5 a spring 12 is fitted, for example a coil spring, arranged between the pressing element 5 and an inner wall 13 of the frame 6.

The spring 12 is dimensioned and arranged so as to be compressed in any position of the pressing element 7 comprised between a minimum penetration position and a maximum penetration position inside the respective tubular element 3 that is reachable during compression of the product contained in the tubular element 3. In this manner the spring 12 is able to exert a thrust on the pressing element 7 when the latter has penetrated the tubular element 3 to compress the product contained therein, also as far as the maximum penetration position, determined by the length of the rods 7. This makes it possible to avoid decreases in pressing force if the product subjected to pressing shrinks, inasmuch as the thrust action of the spring 12 on the pressing element 7 compensates for the possible shrinkage of the product contained in the tubular element 3.

In the practical embodiment, the materials, the dimensions and the constructional details may be different from those indicated but be technically equivalent thereto without thereby falling outside the scope of the present invention as defined by the claims.

For example, in the mould 1 embodiment shown in Figures 1 to 4 it is possible to provided for each mould element 2 being provided with a number of dividing elements 10 other than the number of tubular elements 3, such that, when two mould elements 2 are superimposed, only some of the tubular elements 3 are divided into two parts, such that it is possible to press separately two units of product in some of the tubular elements 3 and press together two or more product units in the remaining tubular elements 3.

## Claims

1. Mould (1; 1a) for pressing food products, comprising a plurality of mould elements (2; 2a) that are superimposable between themselves, each mould element (2, 2a) comprising a plurality of tubular elements (3), that are parallel to one another, and are open at both ends, intended for receiving the products to be pressed in the interior thereof, each mould element (2; 2a) comprising a frame (6) to which are fixed said tubular elements (3), each of said tubular elements (3) being provided at both ends with an upper opening (8), **characterized in that** at opposite ends of the lower part of the frame (6), below each tubular element (3), there are associated respective pressing elements (5), said pressing elements (5) having a shape and dimensions that are such that, when two mould elements (2; 2a) are superimposed, the pressing elements (5) of the upper mould element (2; 2a) can be inserted into the openings (8) of the tubular elements (3) of the mould element (2; 2a) below and slide inside said tubular elements (3).

2. Mould (1; 1a) according to claim 1, wherein each of said pressing elements (5) is provided with a pair of rods (7) that slidingly couple with the respective end of the lower part of the frame (6).

3. Mould (1; 1a) according to claim 2, wherein with each of said rods (7) a one-way arresting element (11) is associated.

4. Mould (1) according to any preceding claim, wherein each of said tubular elements (3) is provided above, in a substantially central position, with a transverse opening (9).

5. Mould (1) according to claim 4, wherein the frame (6) of each mould element (2) is provided, in a substantially central position, below the tubular elements (3), with a plurality of dividing elements (10) suitable for being inserted into the transverse openings (9) of the tubular elements (3) of an underlying mould element (2).

6. Mould (1) according to claim 5, wherein the number of said dividing elements (10) is the same as the number of the tubular elements (3).

7. Mould (1; 1a) according to any preceding claim wherein each tubular element (3) has a substantially rectangular section with rounded corners.

8. Mould (1; 1a) according to any one of claims 2 to 7, wherein on each of said rods (7) of each pressing element (5) there is placed an elastic element (12) arranged between the pressing element (5) and an inner wall (13) of the frame (6), said elastic element (12) being sized so as to be compressed between said pressing element (5) and said inner wall (13), when said pressing element (5) is in any position comprised between a minimum penetration position and a maximum penetration position in the respective tubular element (3).

9. Mould (1; 1a) according to claim 8, wherein said elastic element is a coil spring (12).

## Patentansprüche

1. Form (1; 1a) zum Pressen von Nahrungsmittelprodukten, die eine Vielzahl von Formelementen (2; 2a) aufweist, die übereinander gelagert werden können, wobei jedes Formelement (2; 2a) eine Vielzahl von röhrenförmigen Elementen (3) aufweist, die parallel zueinander sind, und an beiden Enden offen sind, und die dafür vorgesehen sind, in ihrem Inneren die zu pressenden Produkte aufzunehmen, wobei jedes Formelement (2; 2a) einen Rahmen (6) aufweist, an dem die röhrenförmigen Elemente (3) befestigt sind, wobei jedes der röhrenförmigen Elemente (3) an beiden Enden mit einer oberen Öffnung (8) versehen ist, **dadurch gekennzeichnet, dass** an den gegenüberliegenden Enden des unteren Teils des Rahmens (6), unterhalb jedes röhrenförmigen Elements (3), jeweilige Presselemente (5) assoziiert sind, wobei die Presselemente (5) eine Form und Dimensionen derart aufweisen, dass, wenn zwei Formelemente (2; 2a) übereinander gelagert sind, die Presselemente (5) des oberen Formelements (2; 2a) in die Öffnungen (8) des röhrenförmigen Elements (3) des Formelements (2; 2a) unten eingeführt werden und ins Innere des röhrenförmigen Elements (3) gleiten können.

2. Form (1; 1 a) gemäß Anspruch 1, wobei jedes der Presselemente (5) mit einem Paar von Stangen (7) versehen ist, die sich gleitend mit dem jeweiligen Ende des unteren Teils des Rahmens (6) koppeln.

3. Form (1; 1a) gemäß Anspruch 2, wobei mit jeder der Stangen (7) ein Einweg-Arretierungselement (11) verbunden ist.

4. Form (1) gemäß einem der vorherigen Ansprüche, wobei jedes der röhrenförmigen Elemente (3) oben in einer wesentlichen zentralen Position mit einer diagonalen Öffnung (9) versehen ist.

5. Form (1) gemäß Anspruch 4, wobei der Rahmen (6) eines jeden Formelements (2) in einer im wesentlichen zentralen Position unterhalb des röhrenförmigen Elements (3) mit einer Vielzahl von Trennelementen (10) versehen ist, die dazu geeignet sind, um in die diagonalen Öffnungen (9) des röhrenförmigen Elements (3) eines darunter liegenden Formelements (2) eingeführt zu werden.

6. Form (1) gemäß Anspruch 5, wobei die Anzahl der Trennelemente (10) gleich der Anzahl der röhrenförmigen Elemente (3) ist.

7. Form (1; 1a) gemäß einem der vorherigen Ansprüche, wobei jedes röhrenförmige Element (3) einen im Wesentlichen rechtwinkligen Querschnitt mit abgerundeten Ecken aufweist.

8. Form (1; 1a) gemäß einem der Ansprüche 2 bis 7, wobei auf jeder der Stangen (7) eines jeden Presselements (5) ein elastisches Element (12) platziert ist, das zwischen dem Presselement (5) und einer inneren Wand (13) des Rahmens angeordnet ist, wobei das elastische Element (12) derart bemessen ist, so dass es zwischen dem Presselement (5) und der inneren Wand (13) zusammengedrückt werden kann, wenn sich das Presselement (5) in einer beliebigen Position befindet, die zwischen einer minimalen Eindringposition und einer maximalen Eindringposition in dem jeweiligen röhrenförmigen Element (3) liegt.

9. Form (1; 1a) gemäß Anspruch 8, wobei das elastische Element eine Spiralfeder (12) ist.

## Revendications

1. Moule (1 ; 1a) pour le pressage de produits alimentaires, comprenant une pluralité d'éléments de moule (2 ; 2a) qui sont superposables entre eux, chaque élément de moule (2 ; 2a) comprenant une pluralité d'éléments tubulaires (3), qui sont parallèles l'un à l'autre et qui sont ouverts aux deux extrémités, destinés à recevoir les produits devant être pressés à l'intérieur de ceux-ci, chaque élément de moule (2 ; 2a) comprenant une armature (6) à laquelle sont fixés lesdits éléments tubulaires (3), chacun desdits éléments tubulaires (3) étant pourvu aux deux extrémités d'une ouverture (8) supérieure, **caractérisé en ce qu'**aux extrémités opposées de la partie inférieure de l'armature (6), au-dessous de chaque élément tubulaire (3), sont associés des éléments de pressage (5) respectifs, lesdits éléments de pressage (5) ayant une forme et des dimensions qui sont telles que, lorsque deux éléments de moule (2 ; 2a) sont superposés, les éléments de pressage (5) de l'élément de moule (2 ; 2a) supérieur peuvent être insérés dans les ouvertures (8) des éléments tubulaires (3) de l'élément de moule (2 ; 2a) inférieur et coulisser à l'intérieur desdits éléments tubulaires (3).

2. Moule (1 ; 1a) selon la revendication 1, dans lequel chacun desdits éléments de pressage (5) est pourvu d'une paire de tiges (7) qui assurent un couplage coulissant avec l'extrémité respective de la partie inférieure de l'armature (6).

3. Moule (1 ; 1a) selon la revendication 2, dans lequel un élément d'arrêt unidirectionnel (11) est associé à chacune desdites tiges (7).

4. Moule (1) selon une quelconque revendication précédente, dans lequel chacun desdits éléments tubulaires (3) est pourvu à sa partie supérieure, dans une position sensiblement centrale, d'une ouverture transversale (9).

5. Moule (1) selon la revendication 4, dans lequel l'armature (6) de chaque élément de moule (2) est pourvu, dans une position sensiblement centrale, au-dessous des éléments tubulaires (3), d'une pluralité d'éléments diviseurs (10) aptes à être insérés dans les ouvertures transversales (9) des éléments tubulaires (3) d'un élément de moule (2) sous-jacent.

6. Moule (1) selon la revendication 5, dans lequel le nombre desdits éléments diviseurs (10) est identique au nombre des éléments tubulaires (3).

7. Moule (1 ; 1a) selon une quelconque revendication précédente, dans lequel chaque éléments tubulaire (3) a une section sensiblement rectangulaire avec des coins arrondis.

8. Moule (1 ; 1a) selon l'une quelconque des revendications 2 à 7, dans lequel on a placé sur chacune desdites tiges (7) de chaque élément de pressage (5) un élément élastique (12) disposé entre l'élément de pressage (5) et une paroi intérieure (13) de l'armature (6), ledit élément élastique (12) étant dimensionné de manière à être comprimé entre ledit élément de pressage (5) et ladite paroi intérieure (13), lorsque ledit élément de pressage (5) est dans une position quelconque comprise entre une position de pénétration minimale et une position de pénétration maximale dans l'élément tubulaire (3) respectif.

9. Moule (1 ; 1a) selon la revendication 8, dans lequel ledit élément élastique est un ressort hélicoïdal (12).
